# EUROPÄISCHE PATENTSCHRIFT

(11) **EP 1 257 185 B1**
(45) Veröffentlichungstag und Bekanntmachung des Hinweises auf die Patenterteilung: **24.11.2004**
(21) Anmeldenummer: 00987587.3
(22) Anmeldetag: 27.12.2000
(51) Int. Cl.: A47B 13/02, A47B 87/00, A47B 95/00, F16B 12/20

(54) **VERBINDUNGSELEMENT FÜR EIN MÖBELSTÜCK, INSBESONDERE FÜR EINEN TISCH**
CONNECTING ELEMENT FOR A PIECE OF FURNITURE, IN PARTICULAR FOR A TABLE
ELEMENT DE RACCORDEMENT POUR UN MEUBLE, NOTAMMENT POUR UNE TABLE

(30) Priorität: 15.02.2000 DE 20002617 U
(43) Veröffentlichungstag der Anmeldung: 20.11.2002
(73) Patentinhaber: Ensslen GmbH, 72224 Ebhausen (DE)
(72) Erfinder: Dubach, Fredi, 8345 Adetswil (CH)
(74) Vertreter: Blum, Rudolf Emil Ernst
(86) Internationale Anmeldenummer: PCT/IB2000/001969
(87) Internationale Veröffentlichungsnummer: WO 2001/060203

(56) Entgegenhaltungen:
- CH-A- 681 270
- DE-A- 4 316 038
- DE-U- 29 804 684
- US-A- 5 611 637

## Beschreibung

### Hintergrund

Die Erfindung betrifft ein Verbindungselement für ein Möbelstück sowie einen Tisch mit einem derartigen Verbindungselement gemäss Oberbegriff der unabhängigen Ansprüche.

### Stand der Technik

Bei Tischen und anderen Möbelstücken werden Verbindungselemente benötigt, um einzelne Teile des Möbelstücks miteinander zu verbinden. Diese Verbindungselemente sollten eine stabile Verbindung gewährleisten und dennoch in einfacher Weise gelöst werden können.

So sind zum Beispiel Verbindungselemente bekannt, um Tischbeine mit einer Tischplatte zu verbinden. Hierzu sind z.B. Schrauben vorgesehen, mit denen eine Montageplatte mit der Tischplatte verbunden wird. An der Montageplatte ist seinerseits das Tischbein befestigt.

### Darstellung der Erfindung

Es stellt sich deshalb die Aufgabe, ein Verbindungselement bzw. ein Möbelstück der eingangs genannten Art bereitzustellen, welche einfach verbindbar bzw. lösbar sind.

Diese Aufgabe wird vom Gegenstand der unabhängigen Ansprüche gelöst.

Anspruchsgemäss ist also ein Anschlag und mindestens ein über den Anschlag herausstehender Spreizkopf vorgesehen. Der Spreizkopf kann mit einem Spreizorgan gespreizt werden, so dass er sich in der Öffnung der Platte des Möbelstücks verspreizt, d.h. dass er radiale Kräfte auf die Öffnung ausübt und durch diese in der Öffnung gehalten wird. Für die einfache Montage bzw. Demontage kann das Spreizorgan von der Rückseite des Anschlags bedient werden. Unter "Rückseite" ist damit die der Platte gegenüberliegende Seite des Anschlags zu verstehen.

Im Spreizkopf kann z.B. ein Keil oder ein Konus angeordnet werden, der gegen ein radial dehnbares Gehäuse anliegt. Wird dieser Konus achsial verschoben, so wird das Gehäuse gespreizt bzw. gedehnt. Das Gehäuse des Spreizkopfs sollte elastisch sein und kann z.B. aus Kunststoff hergestellt werden.

Zur Aufnahme des Spreizkopfs kann an der Platte eine Montageplatte aus Metall angeordnet sein, welche eine Verstärkung für das Loch bildet. Vorzugsweise ist die Montageplatte in der Platte des Möbelstücks versenkt, so dass die Aussenseite der Metallplatte mit der Platte im wesentlichen fluchtet oder darin zurückversetzt ist.

Es ist jedoch auch denkbar, auf eine derartige Montageplatte zu verzichten. In diesem Falle wird die Spreizkraft des Spreizkopfs vollständig vom Holz der Platte aufgenommen. Dadurch wird die Konstruktion des Möbelstücks vereinfacht. Es zeigt sich überraschenderweise, dass dank der gleichmässigen Kraftübertragung durch den Spreizkopf eine robuste Verbindung ohne Beeinträchtigung des Holzes erreicht wird. Dies gilt insbesondere bei Verwendung eines im wesentlichen runden Spreizkopfes in einer im wesentlichen runden Öffnung.

Vorzugsweise besitzt das Verbindungselement mindestens zwei Spreizköpfe mit zugehörigen Spreizorganen, so dass es zwei Platten verbinden kann.

In einer bevorzugten Ausführung wird das Verbindungselement in einem Tisch verwendet, wo es ein Tischbein mit der Tischplatte verbindet.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 ein Tischbein und einen Tisch mit einem Verbindungselement,
Fig. 2 die Anordnung von Fig. 1 in gelöster Stellung,
Fig. 3 die Anordnung von Fig. 1 in Explosionsdarstellung,
Fig. 4 einen Detailschnitt durch das Verbindungselement und die Tischplatte von Fig. 1 und
Fig. 5 den Detailschnitt von Fig. 4 in gelöster Stellung.

### Wege zur Ausführung der Erfindung

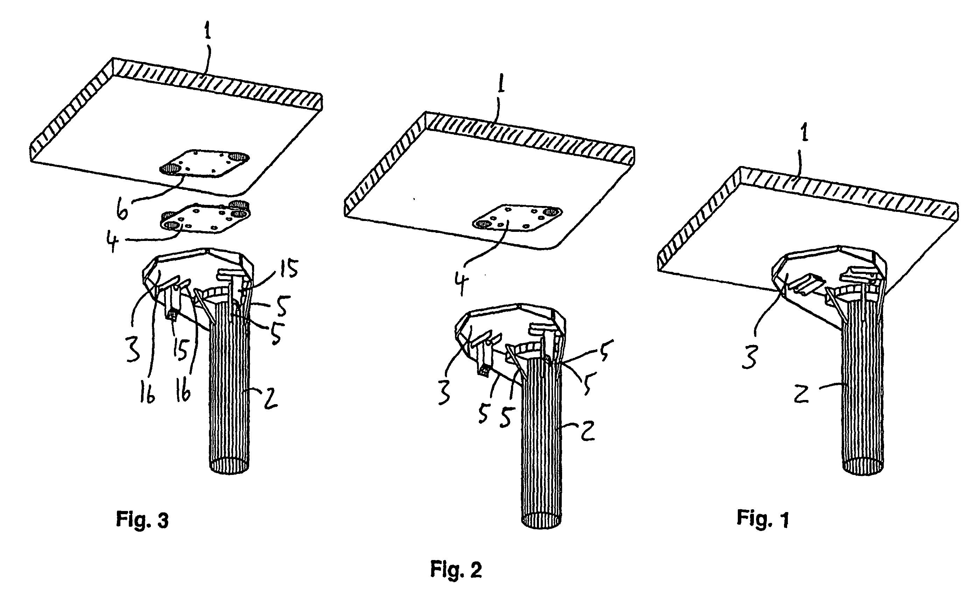

In Fig. 1 - 3 ist ein Teil einer Tischplatte 1, vorzugsweise aus Holz, und eines Tischbeins 2 dargestellt. Zur Verbindung des Tischbeins 2 mit der Tischplatte 1 ist ein Verbindungselement vorgesehen, welches eine Anschlagplatte 3 und eine Montageplatte 4 aufweist. Die Anschlagplatte 3 ist über Streben 5 mit dem Tischbein 2 fest verbunden und kann in der unten beschriebenen Weise lösbar in der Montageplatte 4 verankert werden. Die Montageplatte 4 ist in einer in der Tischplatte 1 ausgefrästen Vertiefung versenkt und mit dieser verschraubt.

Diese Anordnung erlaubt es, die Aussenseite der Montageplatte 4 fluchtend mit oder versenkt in der Unterseite der Tischplatte 1 anzuordnen. Wird das Tischbein abmontiert, verbleiben also an der Tischplatte keine Vorsprünge oder Erhöhungen, so dass mehrere Tischplatten ohne Kratzgefahr gestapelt werden können.

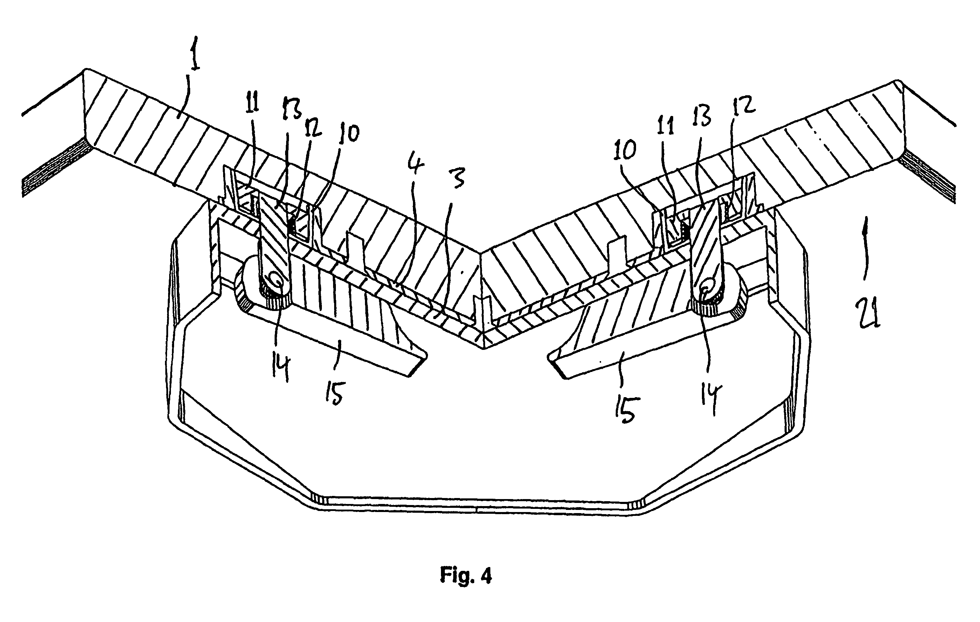

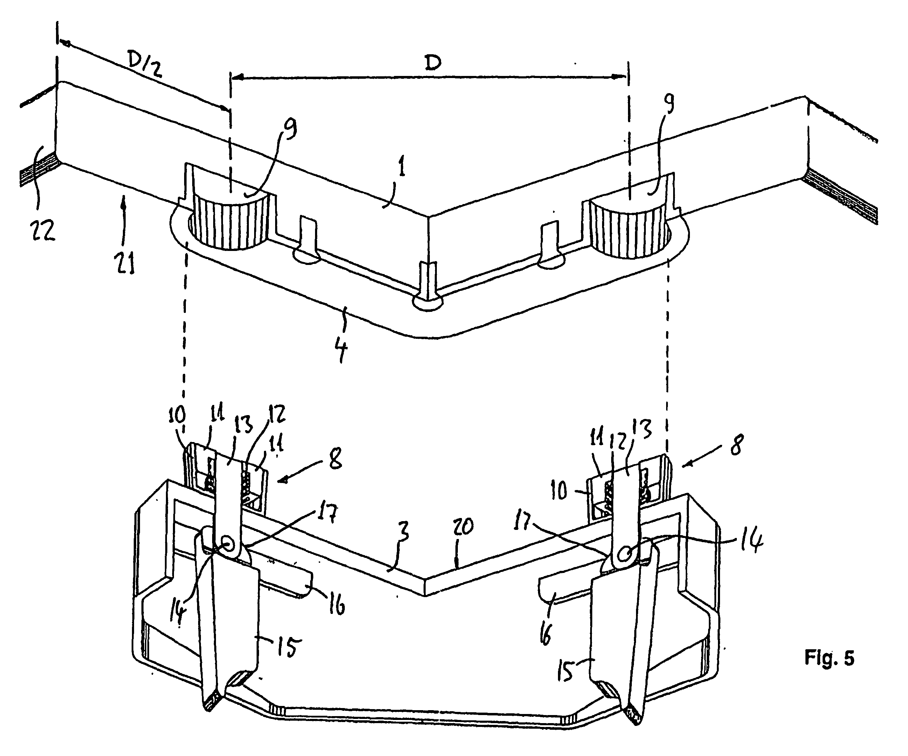

Wie aus der Detailansicht nach Fig. 4 und 5 ersichtlich, sind an der Oberseite der Anschlagplatte 3 zwei Spreizköpfe 8 mit im wesentlichen runden Querschnitt angeordnet. Diese greifen in Öffnungen 9 ein, die in der Montageplatte 4 bzw. der Tischplatte 1 vorgesehen sind.

Sowohl die Öffnungen 9, wie auch die Spreizköpfe 8 besitzen im wesentlichen einen runden Querschnitt. Die Öffnungen 9 verbreitern sich mit zunehmender Tiefe, d.h. sie sind leicht konisch nach oben erweitert. Die Spreizköpfe lassen sich durch ein weiter unten beschriebenes Spreizorgan spreizen, und sind, zumindest im gespreizten Zustand, an ihren oberen Enden breiter als an ihren unteren Enden, so dass sie gut in den Öffnungen 9 halten. Durch die konische Ausgestaltung der Spreizköpfe 8 und der Öffnungen 9 ergibt sich eine Zugwirkung, die dafür sorgt, dass die Anschlagplatte 3 gut an der Tischplatte anliegt.

Jeder Spreizkopf 8 besteht aus einem flexiblen, d.h. radial dehnbaren Gehäuse 10 aus Kunststoff, in welchem ein Konus 11 angeordnet ist. Der Konus 11 wird von einer Druckfeder 12 von der Anschlagplatte 3 weggedrückt und von einer achsialen Haltestange 13 gehalten. Die Haltestange 13 ist achsial verschiebbar in der Anschlagplatte 3 gelagert. An ihrem unteren Ende, d.h. auf der Rück- bzw. Unterseite der Anschlagplatte 3, ist sie über einen Stift 14 mit einem Exzenterhebel 15 verbunden. Der Exzenterhebel 15 ist um den Stift 14 schwenkbar und seitlich von Führungsrippen 16 gehalten (siehe auch Fig. 1 - 3).

Der Exzenterhebel besitzt eine abgerundete Stirnfläche 17, welche exzentrisch zum Stift 14 angeordnet ist. Durch Kippen des Exzenterhebels 15 aus der in Fig. 5 gezeigten vertikalen Stellung in die in Fig. 4 gezeigte horizontale Stellung wird die Haltestange 13 und somit der Konus 11 nach unten gezogen, so dass das Gehäuse 10 gespreizt wird. Dessen Aussendurchmesser ist so bemessen, dass es in gespreiztem Zustand eine radiale Kraft auf die Öffnung 9 ausübt, welche ausreicht, eine gute Verbindung zu gewährleisten. Die Stirnfläche 17 ist derart geformt, dass der Exzenterhebel in der in Fig. 4 gezeigten Stellung selbstarretierend ist, d.h. nur mit gewissem Kraftaufwand wieder gelöst werden kann.

Wie aus dieser Konstruktion ersichtlich ist, kann das Tischbein durch Lösen der Exzenterhebel in einfacher Weise gelöst werden. Zur Montage werden die Spreizköpfe 8 in die Öffnungen 9 eingeführt, wobei die Exzenterhebel in der in Fig. 5 gezeigten Stellung sind. Sodann werden die Exzenterhebel in die in Fig. 4 gezeigte Stellung gebracht und das Tischbein ist verankert. Dabei bildet die Oberseite 20 der Anschlagplatte 3 einen Anschlag, der auf der Unterseite 21 der Tischplatte 1 bzw. der Montageplatte 4 aufliegt.

Die seitliche Wand jeder Öffnung 9 wird in der Ausführung nach Fig. 4 und 5 von der metallenen Montageplatte 4 gebildet, so dass direkte Kräfte auf das Holz vermieden werden. Es zeigt sich jedoch, dass es auch möglich ist, auf die Montageplatte 4 zu verzichten und die Öffnungen 9 direkt im Holz der Platte vorzusehen. In diesem Falle werden die radialen Spreizkräfte der Spreizköpfe 8 direkt vom Holz aufgenommen.

Der Abstand D zwischen den beiden Öffnungen 9 in der Tischplatte 1 entspricht der Summe des halben Abstandes jeder Öffnung zur Tischkante 22, wie dies in Fig. 5 dargestellt ist. Dies erlaubt es, das Verbindungselement auch zu verwenden, um zwei benachbarte Tischplatten zu verbinden und so einen grösseren Tisch zusammenzustellen.

Generell eignet sich das Verbindungselement zum Verbinden verschiedenster Teile von Möbelstücken, z.B. von Tischen, Schränken, Ausstellungswänden, usw.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verbindungselement für ein Möbelstück ausgestaltet zur Befestigung an einer Platte des Möbelstücks mit einen Anschlag (20) zur Anlage des Verbindungselements an die Platte, mehreren über den Anschlag (20) herausstehenden Spreizköpfen (8) zum verspreizten Eingriff in Öffnungen (9) in der Platte, und mit von der Rückseite des Anschlags bedienbaren Spreizorganen (11, 13, 15), durch deren Betätigung die Spreizköpfe (8) zur Verankerung in den Öffnungen (9) spreizbar sind, **gekennzeichnet durch** eine Montageplatte(4), die Löcher zur Bildung der Öffnungen (9) aufweist und ausgestaltet ist zur befestigten Montage in der Platte.

2. Verbindungselement nach Anspruch 1, **dadurch gekennzeichnet, dass** in jedem Spreizkopf (8) ein Keil oder Konus (11) angeordnet ist, welcher gegen ein radial dehnbares Gehäuse (10) anliegt, und dass der Keil bzw. Konus (11) zum Dehnen des Gehäuses mit Hilfe des jeweiligen Spreizorgans achsial verschiebbar ist.

3. Verbindungselement nach Anspruch 2, **dadurch gekennzeichnet, dass** das Gehäuse (10) aus Kunststoff ist.

4. Verbindungselement nach einem der vorangehenden Ansprüche, **dadurch gekennzeichnet, dass** jedes Spreizorgan (11, 13, 15) einen auf der Rückseite des Anschlags (20) angeordneten Exzenterhebel (15) aufweist.

5. Verbindungselement nach einem der Ansprüche 2 oder 3 und nach Anspruch 4, **dadurch gekennzeichnet, dass** der Exzenterhebel (15) mit dem Keil oder Konus (11) verbunden ist.

6. Verbindungselement nach einem der Ansprüche 4 oder 5, **dadurch gekennzeichnet, dass** der Exzenterhebel (15) in einer Stellung, in welcher er den Spreizkopf (8) spreizt, selbstarretierend ist.

7. Verbindungselement nach einem der vorangehenden Ansprüche, **dadurch gekennzeichnet, dass** die Montageplatte aus Metall ist und/oder dass sich die Löcher mit zunehmender Tiefe verbreitern.

8. Verbindungselement nach einem der vorangehenden Ansprüche, **dadurch gekennzeichnet, dass** es zur Verbindung zweier Platten (1a, 1b) zwei Spreizköpfe (8) zur Einführung in die Öffnung (9) der jeweiligen Platte und zwei Spreizorgane (11, 13, 15) zum Spreizen der Spreizköpfe (8) aufweist.

9. Verbindungselement nach einem der vorangehenden Ansprüche, **dadurch gekennzeichnet, dass** jeder Spreizkopf (8) in die Öffnung (9) hinein zunehmend breiter wird.

10. Verbindungselement nach einem der vorangehenden Ansprüche, **dadurch gekennzeichnet, dass** zwei Öffnungen (9) und zwei Spreizköpfe vorgesehen sind.

11. Tisch mit einem Verbindungselement nach einem der vorangehenden Ansprüche, **dadurch gekennzeichnet, dass** das Verbindungselement ein Bein (2) des Tisches mit einer Tischplatte (1, 1a, 1b) verbindet.

12. Tisch nach Anspruch 11, **dadurch gekennzeichnet, dass** das Verbindungselement eine Anschlagplatte (3) aufweist, welche an der Tischplatte (1, 1a, 1b) und/oder an der Montageplatte (4) anliegt und an der das Tischbein (2) befestigt ist.

13. Tisch nach einem der Ansprüche 11 oder 12, **dadurch gekennzeichnet, dass** in der Tischplatte (1, 1a, 1b) Öffnungen (9) zur Aufnahme der Spreizköpfe (8) angeordnet sind.

14. Tisch nach einem der Ansprüche 11 bis 13, **dadurch gekennzeichnet, dass** die Montageplatte (4) in der Tischplatte versenkt ist, derart, dass eine Aussenseite der Montageplatte mit einer Unterseite der Tischplatte fluchtet oder darin versenkt ist.

15. Tisch nach einem der Ansprüche 11 bis 14, **dadurch gekennzeichnet, dass** sich die Öffnungen (9) mit zunehmender Tiefe verbreitern.

16. Tisch nach einem der Ansprüche 10 bis 15, **dadurch gekennzeichnet, dass** jeder Spreizkopf (8) und die ihn aufnehmende Öffnung (9) im wesentlichen runden Querschnitt aufweisen.

## Claims

1. Connecting element for a piece of furniture, designed to be attached to a plate of the piece of furniture with a stop (20) for the connecting element to lie against the plate, several spreading heads (8) extending beyond the stop (20) for a spread engagement in openings (9) in the plate, and with spreading devices (11, 13, 15) which can be operated from the backside of the stop, by the operation of which the spreading heads (8) can be spread for anchoring in the openings (9), **characterized by** a mounting plate (4), which comprises holes for forming of the openings (9) and is designed for attached mounting in the plate.

2. Connecting element according to claim 1, **characterized in that** in each spreading head (8) a wedge or cone (11) is arranged, which lies against a radially expandable casing (10), and that the wedge or cone (11) is axially shiftable for expanding the casing using the particular spreading device.

3. Connecting element according to claim 2, **characterized in that** the casing (10) is made from plastics.

4. Connecting element according to one of the preceding claims, **characterized in that** each spreading device (11, 13, 15) comprises an eccentric lever (15) arranged on the backside of the stop (20).

5. Connecting element according to one of the claims 2 or 3 or according to claim 4, **characterized in that** the eccentric lever (15) is connected with the wedge or cone (11).

6. Connecting element according to one of the claims 4 or 5, **characterized in that** the eccentric lever (15) is self-arresting in a position in which it spreads the spreading head (8).

7. Connecting element according to one of the preceding claims, **characterized in that** the mounting plate is made from metal and/or that the holes get wider with increasing depth.

8. Connecting element according to one of the preceding claims, **characterized in that** it comprises for a connecting of two plates (la, 1b) two spreading heads (8) to be inserted in the opening (9) of the particular plate and two spreading devices (11, 13, 15) for spreading the spreading heads (8).

9. Connecting element according to one of the preceding claims, **characterized in that** each spreading head (8) gets increasingly wider into the opening (9).

10. Connecting element according to one of the preceding claims, **characterized in that** two openings (9) and two spreading heads are provided.

11. Table with a connecting element according to one of the preceding claims, **characterized in that** the connecting element connects a leg (2) of the table with a table top (1, 1a, 1b).

12. Table according to claim 11, **characterized in that** the connecting element comprises a stop plate (3), which lies against the table top (1, 1a, 1b) and/or against the mounting plate (4) and to which the table leg (2) is attached.

13. Table according to one of the claims 11 or 12, **characterized in that** openings (9) for reception of the spreading heads (8) are arranged in the table top (1, 1a, 1b).

14. Table according to one of the claims 11 to 13, **characterized in that** the mounting plate (4) is counter-sunk in the table top, such that an outer surface of the mounting plate is aligned with a bottom surface of the table top or is counter-sunk in it.

15. Table according to one of the claims 11 to 14, **characterized in that** the openings (9) get wider with increasing depth.

16. Table according to one of the claims 10 to 15, **characterized in that** each spreading head (8) and the opening (9) receiving it has a substantially round cross section.

## Revendications

1. Élément de raccordement pour un meuble, configuré pour être fixé à une plaque du meuble, comprenant une butée (20) pour placer l'élément de raccordement contre la plaque, plusieurs têtes d'écartement (8) faisant saillie au-dessus de la butée (20) pour entrer en prise de manière écartée avec des ouvertures (9) de la plaque, et des organes d'écartement (11, 13, 15) manoeuvrables depuis le côté arrière de la butée par l'action desquels les têtes d'écartement (8) peuvent être écartées pour l'ancrage dans les ouvertures (9), **caractérisé par** une plaque de montage (4) qui présente des orifices pour la formation des ouvertures (9) et qui est configurée pour être montée de manière fixe dans la plaque.

2. Élément de raccordement selon la revendication 1, **caractérisé en ce qu'**un coin ou cône (11), qui est juxtaposé à un logement (10) radialement extensible, est disposé dans chaque tête d'écartement (8) et **en ce que** le coin ou cône (11) peut être déplacé axialement à l'aide de l'organe d'écartement concerné pour étendre le logement.

3. Élément de raccordement selon la revendication 2, **caractérisé en ce que** le logement (10) est en matière synthétique.

4. Élément de raccordement selon une des revendications précédentes, **caractérisé en ce que** chaque organe d'écartement (11, 13, 15) présente un levier excentrique (15) disposé sur le côté arrière de la butée (20).

5. Élément de raccordement selon une des revendications 2 ou 3 ou selon la revendication 4, **caractérisé en ce que** le levier excentrique (15) est relié au coin ou cône (11).

6. Élément de raccordement selon une des revendications 4 ou 5, **caractérisé en ce que** le levier excentrique (15) s'arrête automatiquement dans une position dans laquelle il écarte la tête d'écartement (8).

7. Élément de raccordement selon une des revendications précédentes, **caractérisé en ce que** la plaque de montage est en métal et / ou **en ce que** les orifices s'élargissent à mesure que la profondeur augmente.

8. Élément de raccordement selon une des revendications précédentes, **caractérisé en ce qu'**il présente pour le raccordement de deux plaques (1a, 1b) deux têtes d'écartement (8) à insérer dans l'ouverture (9) de la plaque concernée et deux organes d'écartement (11, 13, 15) pour élargir les têtes d'écartement (8).

9. Élément de raccordement selon une des revendications précédentes, **caractérisé en ce que** chaque tête d'écartement (8) devient de plus en plus large à l'intérieur de l'ouverture (9).

10. Élément de raccordement selon une des revendications précédentes, **caractérisé en ce que** deux ouvertures (9) et deux têtes d'écartement sont prévues.

11. Table avec un élément de raccordement selon une des revendications précédentes, **caractérisée en ce que** l'élément de raccordement relie un pied (2) de la table à une plaque (1, 1a, 1b) de table.

12. Élément de raccordement selon la revendication 11, **caractérisé en ce que** l'élément de raccordement présente une plaque de butée (3) qui repose contre la plaque (1, 1a, 1 b) de table et / ou la plaque de montage (4) et à laquelle le pied (2) de table est fixé.

13. Élément de raccordement selon la revendication 11 ou 12, **caractérisé en ce que** des ouvertures (9) pour accueillir les têtes d'écartement (8) sont disposées dans la plaque (1, 1a, 1b) de table.

14. Élément de raccordement selon une des revendications 11 à 13, **caractérisé en ce que** la plaque de montage (4) est enfoncée dans la plaque de table de telle manière qu'un côté extérieur de la plaque de montage affleure à un côté inférieur de la plaque de table ou y soit enfoncé.

15. Élément de raccordement selon une des revendications 11 à 14, **caractérisé en ce que** les ouvertures (9) s'élargissent à mesure que la profondeur augmente.

16. Élément de raccordement selon une des revendications 10 à 15, **caractérisé en ce que** chaque tête d'écartement (8) et l'ouverture (9) qui l'accueille présentent une section essentiellement ronde.
